# FASCICULE DE BREVET EUROPEEN

(11) **EP 1 230 010 B1**
(45) Date de publication et mention de la délivrance du brevet: **20.08.2003**
(21) Numéro de dépôt: 00964343.8
(22) Date de dépôt: 22.09.2000
(51) Int. Cl.: B01J 13/04

(54) **MICROGRANULES DE POLYMERES HETEROSIDES D'ORIGINE MARINE CONTENANT DIVERSES SUBSTANCES HYDROPHILES OU HYDROPHOBES, PROCEDES D'UTILISATION DANS LES DOMAINES ALIMENTAIRES, DIETETIQUES OU PHARMACEUTIQUES**
MIKROKÖRNCHEN VON POLYMEREN HETEROSIDEN MARINEN URSPRUNGS, DIE VERSCHIEDENE HYDROPHILE ODER HYDROPHOBE SUBSTANZEN ENTHÄLT, SOWIE DEREN VERWENDUNG IN DEN BEREICHEN DER ERNÄHRUNG, DER DIÄTEN ODER DER PHARMAZIE
HETEROSIDE POLYMER MICROGRANULES OF MARINE ORIGIN CONTAINING VARIOUS HYDROPHILIC OR HYDROPHOBIC SUBSTANCES, METHODS FOR USING SAME IN FOOD, DIETETIC OR PHARMACEUTICAL PRODUCTS

(30) Priorité: 08.11.1999 FR 9914256
(43) Date de publication de la demande: 14.08.2002
(73) Titulaire: Laboratoire Oligocaps S.A., 22950 Trégueux (FR)
(72) Inventeur: GRANDMONTAGNE, Bernard, Lilia, 29880 Pl ougerneau (FR); GOURDEL, Yann, F-22410 Lantic (FR); TRONEL, Jacqueline, F-22530 Saint Gilles Vieux Marché (FR)
(74) Mandataire: Larcher, Dominique
(86) Numéro de dépôt international: FR0002622
(87) Numéro de publication internationale: WO01034289

(56) Documents cités:
- EP-A- 0 860 166
- DE-A- 4 035 187
- FR-A- 2 700 973
- FR-A- 2 701 031
- PATENT ABSTRACTS OF JAPAN vol. 013, no. 233 (C-601), 29 mai 1989 (1989-05-29) & JP 01 040501 A (ASAHI GLASS CO LTD;OTHERS: 01), 10 février 1989 (1989-02-10)

## Description

La présente invention concerne l'utilisation de granules ou microgranules de chitine déacétylés ou chitosane enrobant ou contenant divers principes actifs hydrophiles ou lipophiles ayant un intérêt nutritionnel ou thérapeutique.

Nous incluons cette invention dans le domaine alimentaire, diététique et pharmaceutique.

La chitine ou β-(14)-2 acétamido-2-deoxy- β-D-Glucose est un polymère rentrant dans la composition de la carapace des arthropodes, crustacés et insectes mais aussi dans la membrane externe de certains champignons.
Ce composant permet la rigidité de l'endosquelette des céphalopodes. Elle est au monde animal ce que la cellulose est au monde végétal.

Cette substance est inerte vis à vis de nombreux substrats grâce à une transformation de sa structure chimique, passage par traitement chimique ou N-désacétylation au β-(14)-2 amino-2-deoxy- β-Glucose ou chitosane. Cette dernière substance devenant plus facile à employer du fait de sa moindre inertie chimique. Lorsque la désacétylisation est totale, on obtient un chitosane régulier ou polyglucosamine.
Ce taux de désacétylisation influera sur les propriétés physiques du chitosane, solubilité et viscosité, mais également sur un comportement biochimique.

De nombreux travaux ont décrit dans les grandes lignes ses mécanismes d'action. Sous sa forme brute de paillette, l'adsorption et plus précisément la chimisorption, c'est à dire la fixation de molécules en surface du polymère est bien connue. Il a été démontré que la forte potentialité du chitosane est la résultante d'un mécanisme d'absorption en volume, limité par des phénomènes de diffusion. La forme du chitosan et la géométrie du matériau utilisé sont alors essentielles. Brute sous forme d'écaille, la surface spécifique du chitosane ne dépasse pas quelques centimètres carrés par gramme ce qui en limite singulièrement l'intérêt.

L'usage du chitosane est intéressant dans le domaine alimentaire, diététique en raison de sa très grande richesse en fibres et d'autre part par le potentiel intéressant de sa structure de former des liaisons fortes avec des dérivés lipophiles ou autres composants mais ce principe actif seul peut atteindre ses limites lorsque l'on veut obtenir une action importante avec peu de substrat ou lorsque l'on veut un effet progressif de cet élément dans le temps.

Afin de délimiter ces effets négatifs en accroissant la cinétique de fixation du chitosane, diverses solutions ont été proposées tels que le broyage, la lyophilisation de solutions ou encore l'éclatement sous pression, toutes ces techniques ayant pour but d'accroître le rapport surface masse de chitosane et d'accroître parallèlement l'activité globale du chitosane.

Il semble intéressant de constituer au sein de ces microgranules ou granules un complexe chitosane - catalyseur pour d'une part augmenter l'activité du chitosane et d'autre part, augmenter le temps d'activité et la spécificité de l'activité.

L'incorporation dans la trame de la structure du chitosane d'un matériau à très forte surface spécifique est de nature à accroître son activité non pas en terme de potentialité de fixation mais en cinétique. L'incorporation de ce catalyseur permet d'accroître la vitesse de réaction du chitosane de façon notoire même s'il est présent en faible quantité. FR-A-2700973 décrit ainsi des microbilles dans lesquelles le chitosane est complexé avec du noir de carbone.

Néanmoins ce complexe catalyseur - chitosane voit son activité diminuer en fonction de sa teneur en eau. Il s'ensuit une perte d'activité lorsque le système est séché du fait de la condensation du chitosane sur le catalyseur. La trame du polymère ainsi complexée et séchée perd sa porosité au point d'expulser tous les sels ioniques présents dans le système.
Pour éviter ces problèmes importants du point de vue de l'activité du complexe, il est nécessaire d'en préserver la structure et en particulier l'hydratation et la porosité.

Il est possible aussi pour accroître l'activité du système de créer une porosité virtuelle en dopant le complexe à l'état sec et de préférence par un élément hygroscopique, non ionique et soluble dans l'élément aqueux.
Le choix s'est tourné vers des molécules de structures proches du polymère chitosane par exemple, le glucose, le saccharose ou oligofructose.

Ce composé une fois désacétylé peut être utilisé sous forme de granule, microgranules ou billes comme il a été décrit par exemple dans la demande de brevet FR 2 701 031 « procédés et dispositifs pour la fabrication de billes de polymères ».

### Exemple 1

Les microperles sont obtenues à partir de :
- 70% chitosan à 90% de degré de désacétylisation
- 20 % de glucose
- 10 % de chlorure de sodium
- 2% de noir de carbone alimentaire

Les perles fabriquées à partir du complexe chitosane - noir de carbone dont cette dernière substance joue le rôle de catalyseur d'activation. Elles sont condensées goutte à goutte, puis saturées en chlorure de sodium et glucose puis séchées.

### Exemple 2

Les microperles sont obtenues à partir de :
- 55% chitosan à 90% de degré de désacétylisation
- 30 % de phosphate de sodium
- 2% de noir de carbone

Les perles fabriquées à partir du complexe chitosane - noir de carbone dont cette dernière substance joue le rôle de catalyseur d'activation. Elles sont condensées goutte à goutte, puis saturées en sulfate de sodium et séchées.

### Exemple 3

Les microperles sont obtenues à partir de :
- 55% chitosan à 90% de degré de désacétylisation
- 42% de fructose
- 2% d'un sel de fer

Les perles fabriquées à partir du complexe chitosane - sel de fer dont cette dernière substance joue le rôle de catalyseur d'activation. Elles sont condensées goutte à goutte, puis saturées en fructose et séchées.

### Exemple 4

Les microperles sont obtenues à partir de :
- 55% chitosan à 90% de degré de désacétylisation
- 42 % de sucres de nature oligofructoses ayant des caractéristiques nutritionnelles bien établies
- 10% d'extraits de café
- 2% de noir de carbone alimentaires

Les perles fabriquées à partir du complexe chitosane - noir de carbone dont cette dernière substance joue le rôle de catalyseur d'activation. Elles sont condensés goutte à goutte, puis saturées en oligosaccharides et en extraits de café et séchées.
Les microperles offrent ainsi toutes les garanties de qualité et de reproductibilité difficiles à obtenir des produits naturels.

Les microgranules pouvant aussi être dénommées perles, micropènes, microbilles sont formées de chitosane, de substances hydrophobes ou non hydrophobes, dont au moins une de ces substances peut joué le rôle de substance catalytique formant ainsi avec le chitosane un complexe.
Ces microgranules ainsi formées ont une forte attraction vis à vis de toutes substances et en particulier vis à vis des substances huileuses. Selon les premiers résultats d'études cliniques, l'utilisation de ces microgranules par de nombreux sujets montre une nette diminution du poids de ces sujets ainsi qu'un remodelage conséquent de la silhouette. Ces deux actions s'expliquent par la limitation de l'absorption lipidique du fait de la complexation microgranules - substances huileuses. D'autres essais réalisés montrent lors de l'utilisation de ces microgranules une forte potentialité de complexation avec des substances issues de métaux lourds limitant ainsi l'absorption par l'organisme de ces microparticules.
La formation de microgranules de chitosane complexées avec certaines substances permettent grâce à un mécanisme d'échange et de captation la limitation de la formation de molécules dénommées : radicaux libres, rentrant en jeu dans beaucoup de réactions biologiques.

## Revendications

1. Microgranules constituées par un complexe de chitosane ou dérivé de chitosane et d'un matériau à très forte surface spécifique de nature à accroître la cinétique de fixation du chitosane avec des dérivés lipophiles ou d'autres composants, **caractérisées en ce que** ledit matériau à très forte surface spécifique est du noir de carbone alimentaire et **en ce qu'**elles incluent de plus un élément hygroscopique, non ionique et soluble dans l'élément aqueux, présentant une structure proche du chitosane, ledit élément hygroscopique visant à préserver la structure et en particulier l'hydratation et la porosité dudit complexe chitosane-noir de carbone.

2. Microgranules selon la revendication 1 **caractérisées en ce que** ledit élément hygroscopique est choisi dans le groupe constitué par le glucose, le saccharose ou l'oligofructose.

3. Microgranules selon la revendication 1 ou 2 **caractérisées en ce que** ledit chitosane présente un degré de désacétylisation de 90%.

4. Microgranules selon l'une quelconque des revendications 1 à 3 **caractérisé en ce qu'**elles comprennent de plus un extrait de café.

5. Microgranules selon l'une quelconque des revendications 1 à 3 **caractérisées en ce qu'**elles comprennent de plus du chlorure de sodium.

6. Procédé de fabrication de microgranules selon l'une quelconque des revendications 1 à 5 **caractérisé en ce qu'**il comprend les étapes consistant à condenser goutte à goutte ledit complexe chitosane-noir de carbone puis à saturer ledit complexe avec ledit élément hygroscopique et à sécher l'ensemble.

7. Utilisation des microgranules selon l'une quelconque des revendications 1 à 5 pour complexer les substances huileuses.

8. Utilisation des microgranules selon l'une quelconque des revendications 1 à 5 pour complexer les métaux lourds.

9. Utilisation des microgranules selon l'une quelconque des revendications 1 à 5 pour limiter la formation des radicaux libres.

## Patentansprüche

1. Mikrokörnchen, bestehend aus einem Chitosan-Komplex oder einem Chitosan-Derivat und einem Material mit sehr starker spezifischer Oberfläche zum Beschleunigen der Chitosan-Bindungskinetik mit lipophilen Derivaten oder anderen Bestandteilen, **dadurch gekennzeichnet, dass** das Material mit sehr starker spezifischer Oberfläche aus nahrungsgeeignetem Rußschwarz ist und das sie zusätzlich ein hygroskopisches, nicht-ionisches und in wässriger Phase lösliches Element besitzen, das eine Chitosan-verwandte Struktur darbietet, wobei das hygroskopische Element vorgesehen ist zum Aufrechterhalten der Struktur und insbesondere der Hydratation und der Porosität des Chitosan-Rußschwarz-Komplexes.

2. Mikrokörnchen nach Anspruch 1, **dadurch gekennzeichnet, dass** das hygroskopische Element ausgewählt ist aus der Gruppe bestehend aus Glukose, Saccharose und Oligofructose.

3. Mikrokörnchen nach Anspruch 1 oder 2, **dadurch gekennzeichnet, dass** das Chitosan zu 90% deacetyliert ist.

4. Mikrokörnchen nach einem der Ansprüche 1 bis 3, **dadurch gekennzeichnet, dass** sie ferner einen Kaffee-Extrakt umfassen.

5. Mikrokörnchen nach einem der Ansprüche 1 bis 3, **dadurch gekennzeichnet, dass** sie ferner Natriumchlorid umfassen.

6. Verfahren zum Herstellen von Mikrokörnchen nach einem der Ansprüche 1 bis 5, **dadurch gekennzeichnet, dass** es die Schritte umfasst: Tropfenweises Kondensieren des Chitosan-Rußschwarz-Komplexes und anschließendes Sättigen des Komplexes mit dem hygroskopischen Element und dem Trocknen der Gesamtheit.

7. Verwendung von Mikrokörnchen nach einem der Ansprüche 1 bis 5 zum Komplexieren öliger Substanzen.

8. Verwendung von Mikrokörnchen nach einem der Ansprüche 1 bis 5 zum Komplexieren von Schwermetallen.

9. Verwendung von Mikrokörnchen nach einem der Ansprüche 1 bis 5 zum Begrenzen der Bildung von freien Radikalen.

## Claims

1. Microgranules consisting of a complex of chitosan or of a chitosan derivative and of a material with a very high specific surface area capable of increasing the binding kinetics of the chitosan with lipophilic derivatives or other components, **characterized in that** the said material with a very high specific surface area is food-grade carbon black and **in that** they furthermore include a nonionic hygroscopic element that is soluble in the aqueous element, having a structure similar to that of chitosan, the said hygroscopic element being intended to preserve the structure and in particular the hydration and the porosity of the said chitosan-carbon black complex.

2. Microgranules according to Claim 1, **characterized in that** the said hygroscopic element is chosen from the group consisting of glucose, sucrose and oligofructose.

3. Microgranules according to Claim 1 or 2, **characterized in that** the said chitosan has a degree of deacetylation of 90%.

4. Microgranules according to any one of Claims 1 to 3, **characterized in that** they furthermore comprise a coffee extract.

5. Microgranules according to any one of Claims 1 to 3, **characterized in that** they furthermore comprise sodium chloride.

6. Process for manufacturing microgranules according to any one of Claims 1 to 5, **characterized in that** it comprises the steps consisting in condensing the said chitosan-carbon black complex dropwise and then saturating the said complex with the said hygroscopic element and drying the whole.

7. Use of the microgranules according to any one of Claims 1 to 5, for complexing oily substances.

8. Use of the microgranules according to any one of Claims 1 to 5, for complexing heavy metals.

9. Use of the microgranules according to any one of Claims 1 to 5, for limiting the formation of free radicals.
